# EUROPEAN PATENT SPECIFICATION

(11) **EP 1 512 969 B1**
(45) Date of publication and mention of the grant of the patent: **06.05.2009**
(21) Application number: 04255254.7
(22) Date of filing: 31.08.2004
(51) Int. Cl.: G01N 31/22

(54) **A detector or sensor for dry rot (serpula lacrimans) in buildings**
Sensor für Trockenfäule in Gebäuden
Capteur de pourriture sèche dans les bâtiments

(30) Priority: 05.09.2003 GB 0320802
(43) Date of publication of application: 09.03.2005
(73) Proprietor: McGill, George, Glasgow G12 0PH (GB)
(72) Inventor: McGill, George, Glasgow G12 0PH (GB)

(56) References cited:
- EP-A- 1 201 255
- PATENT ABSTRACTS OF JAPAN vol. 1995, no. 10, 30 November 1995 (1995-11-30) & JP 07 191013 A (HAYASHI KAGAKU KOGYO KK), 28 July 1995 (1995-07-28)
- PATENT ABSTRACTS OF JAPAN vol. 1995, no. 01, 28 February 1995 (1995-02-28) & JP 06 297413 A (SEIREN CO LTD), 25 October 1994 (1994-10-25)

## Description

The present invention relates to a sensor or device which can alert the building occupant or his agent to the presence of a condition of timber rot in buildings, including and especially Dry Rot caused by the fungus *(Serpula lacrimans)* without the need for disruption to the building fabric.

It can also be used to determine if an outbreak of dry rot is active or alive, and can therefore be used to determine whether a remedial strategy has been successful i.e. if the dry rot fungus is alive or dead at the end of the remedial work.
The sensor consists of a dowell or plug of a light coloured wood which after preconditioning is impregnated with a pH sensitive reagent. The sensor absorbs moisture from the building fabric that can be accurately measured using an electrical moisture meter. In the presence of dry rot the sensor undergoes a colour change that alerts the user to the presence of dry rot.

### Background to the Invention

Timber rot in buildings is the result of decay of timber building components by wood destroying fungi, mainly basidiomycetes. Such decay is commonly describes as wet rot and dry rot although these terms do not have a precise meaning. All timber decay in buildings comes about as the result of moisture ingress to the fabric. This is turn increases the moisture content of timber components to the extent that rot can take place. Moisture ingress can be due to defects in the fabric or services, or it can be the result of condensation or high atmospheric humidity. It is generally accepted that moisture levels in timber in excess of 20% by weight are required to initiate and sustain timber decay Wood decay problems in buildings caused by fungi are common in all temperate areas of the world.

Dry Rot, the decay of timber by the fungus *Serpula lacrimans,* is the most serious timber decay problem in buildings in the UK and other temperate regions. When environmental conditions permit (usually resulting from a failure in building maintenance) the fungus decays timber components and without remedial action considerable structural damage can ensue. Damage may be considerable and extend far beyond structural elements to valuable artefacts such as ornamental plasterwork and timber panelling. The unique ability of the dry rot fungus to penetrate the non-timber elements of buildings, such as masonry and plaster, in the form of mycelial strands, and to transport water through those strands, allows the fungus to spread considerable distances from its point of origin.

The conditions for growth and development of the fungus are usually present in locations within the building that are not immediately accessible. The detection of rot is therefore difficult and assessment of the extent to which it has developed usually involves disruptive investigation. Such disruptive investigation can involve damage to valuable features.

During the past 20 years there has been an increased interest in developing alternative strategies for dry rot control in buildings in order to limit the damage to valuable features and also to minimise the environmental impact by reducing the use of pesticides. The sensor can increase the effectiveness of such new approaches to dry rot control.

The sensor is very useful in carrying out a less disruptive approach to dry rot control. The sensor is also able to alert the building occupant or his agent to the presence of other timber decay conditions commonly described as wet rot, existing within the building fabric. Wet rot is commonly regarded as timber rot caused by fungi other than *Serpula lacrimans.*

The current procedures in common use for the detection of timber rot in buildings typically involve visual inspection and probing, sometimes supplemented by moisture measurement usually using an electronic meter. Further investigation might involve the uplifting of floors removal of plasterwork paneling or other building components in an attempt to see how far the condition has spread. Such investigation is in itself damaging to the building.

At the present time most of the instances of timber rot in domestic and commercial premises are commonly discovered when the properties have been surveyed by a professional surveyor. This may occur or during renovation or alteration works. In some instances problems are uncovered by a contractor engaged in other works. In severe cases where structural degradation is obvious and severe the problem may be discovered by a building owner or caretaker.

The present invention will allow the building owner or his agent to test for the presence of dry rot.

In all cases timber rot arises as a result of water ingress. Water ingress and the resulting spread of dampness through the fabric are the principal means by which timber rot conditions are initiated and sustained. It is therefore essential that accurate spread of moisture throughout the building fabric can be ascertained. The assessment of moisture content in buildings is complicated by the differing water holding capacity of the components of the building fabric. different materials have a different natural water holding capacity. Plaster for example might be considered wet when the moisture content is 1 % by dry weight. Wood on the other hand would be considered dry at a moisture content of 14% by dry weight. It is of fundamental importance to measure the free moisture (or moisture available to sustain fungal colonisation and growth) not simply the total moisture which might include natural water such as water of crystallisation. Problems of structural dampness or moisture ingress through flues or rising dampness can lead to contamination of the building fabric and lead to an increase in the natural water holding capacity of a substrate by the presence of hygroscopic salts. Such salts enhance the electrical conductivity of the building fabric and lead to erroneous readings when electronic moisture meters are used.

The present invention will determine the available free moisture and will not give false results due to contamination or the natural water holding capacity of the fabric.

### Brief description of the drawings.

Figure 1 shows the relationship between the percentage moisture content of dowel sensors determined gravimetrically and the percentage moisture content determined with the "Protimeter Surveymaster", an electronic resistance meter.
Figure 2 shows a dowel located in an adapter or holder.
Figure 3 shows a dowel located in an adaptor or holder having electrical contacts that are in contact with the external surface of the dowel.

### Detailed description of the invention.

It is known that hygroscopic materials can be used to measure moisture content at various points in the building fabric and that wood can form a useful sensor for measuring wood moisture content The presence of extraneous substances in wood interferes with the reliability with which moisture is absorbed and desorbed. The period of preconditioning to which the sensors are subjected overcomes this difficulty and greatly improves the reliability and predictability with which water is absorbed and desorbed. Although the present invention therefore offers an improvement over existing methodology for measuring moisture the primary purpose of the sensor is to detect the dry rot fungus or other wood destroying fungi within the fabric of a building. The presence of an excess of free moisture only serves as an indication that an at-risk location has been identified.

The installation of this sensor into the building fabric will allow the measurement of moisture and clearly indicate where there is a risk of timber decay. When the moisture levels fall to normal then the risk of decay is no longer present Some moisture sensors quickly become waterlogged, and take a long time to dry out. The sensors described in this invention quickly desorb water and therefore more quickly reach equilibrium humidity with the building fabric.

In areas that are judged to be at risk as a result of having a high moisture content the sensor is removed for physical examination. In the presence of viable decay fungi a colour change is exhibited by the sensor. This enables the area affected by the decay fungus to be mapped out without removing large areas of the building fabric.

The usefulness of the sensors does not depend on the ability to detect moisture. Sensors may be used to detect decay fungi simply by insertion in a pre-drilled hole and removal at intervals for physical examination.

The sensor enables the viability of the decay fungus to be monitored since when there is no longer a colour change in the sensor the fungus may be declared non-viable. This is of great value in determining the efficacy of environmental control and pesticide-free methods of wood rot control.

Certain Wood destroying fungi, including the dry rot fungus *Serpula lacrimans* are known to bring about a pH reduction of the substrate during the biological decomposition of wood. By applying pH sensitive reagents to the surface of the attacked wood fungal colonization can be detected and visualized by a change in colour of the reagent. However since the change in colour takes place before any substantial decay of wood takes place the present invention can allow decay to be mapped out in a building before substantial damage takes place Nonetheless, measuring the pH can be used to detect viable microorganism as shown in EP 1 201 255.

The pH reduction is caused by the production of organic acids It is likely that the organic acids form part of a non-enzymatic process of cellulose decomposition. Oxalic acid is produced in large quantities by fungi causing brown rot decay, and is produced by many white rot causing fungi. The precise nature of the process of cellulose decomposition remains unclear but it is likely that the oxalic acid functions as a catalyst to enable a hydrolysis reaction to take place within the crystalline lattice of the cellulose component of the wood cell wall.
The exact biochemistry of the process remains to be fully elucidated. However it is clear that brown rot and many white rot fungi produce organic acids especially oxalic acid and that this plays a part in the microbial decomposition of the cellulose cell wall. The cellulose component of wood cell walls represents around 30 % of the structure by weight of wood.

The principle of this invention is the detection of organic acids produced by wood destroying fungi in parts of a building where there is a sufficiency of free moisture. The invention is a sensor that enables both moisture to be measured and organic acid production to be detected at the same time in building components.

### The invention

The principle was developed from the knowledge that wood destroying fungi bring about a reduction in pH of the substrate usually in the range pH 3 to 5.

The principle of the technique depends upon the production of organic acids by decay fungi which occurs in a moist environment during hyphal colonization of wood in susceptible locations within buildings.

The production of organic acids is essentially a precursor to enzymatic decay and occurs before any substantial wood decay takes place

To detect this biochemical process it is necessary to place in a susceptible location a detector that is capable of absorbing and desorbing in a predictable way the free moisture present in that location and is capable of reacting without interference to the production of organic acids by decay fungi available to colonise wood at that location.

The present invention does both.

The sensor identifies parts of the building where wood rot is likely to occur because of the elevated levels of free moisture. At the same time it identifies parts of the building where wood rot fungi are actually present by changing colour.

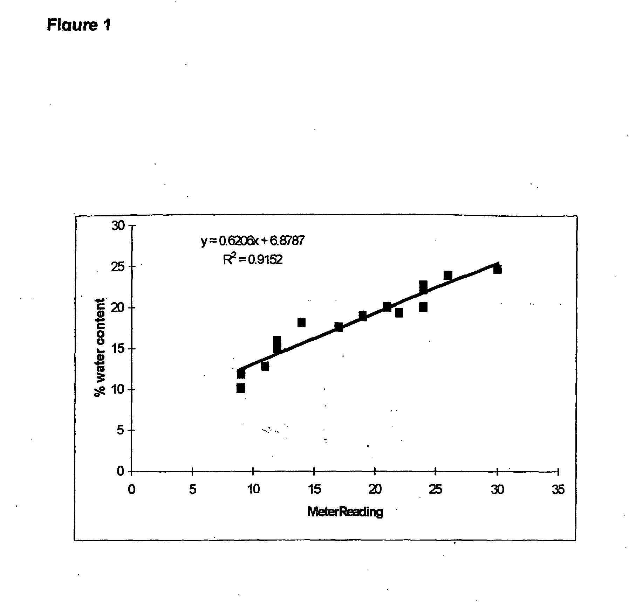

The property of the sensor to reliably absorb and desorb moisture in equilibrium with its location in the building fabric, and allow the free moisture content of the fabric to be measured is illustrated in **Figure 1**

Figure 1 shows that the moisture content of the sensors are closely correlated with electronic moisture readings using a "Protimeter" moisture meter. Moisture meters are routinely used to measure moisture in buildings.

### Manufacture

The sensor comprises a solid piece of wood that may be circular, square or rectangular in cross section. Circular cross sectional dowells are convenient since they are readily available in convenient cross sectional dimensions.
The sensor is manufactured from "Ramin" *Gonystylus macrophyllum.* Ramin is a light coloured hardwood timber containing very little extractives and resin. The capacity of Ramin to absorb and desorb water in a reliable and predictable way is enhanced by a period of preconditioning before use. Any light coloured wood that has similar properties to Ramin may be suitable as a sensor, after pre-conditioning. Preconditioning helps to reduce the effects of hysteresis, and improves the reliability of moisture measurement.

Wood is the preferred material from which the manufacture the sensors since the decay precursors, organic acids, to which the reagent reacts are substrate-inducible and therefore only secreted by wood decaying fungi in the presence of wood. The presence of wood is detected by the fungus before decay is initiated. The fungus responds to the presence of wood by producing the organic acid decay precursors

The preconditioning of the sensors consists of heating to 100 C for 24 hours and allowing to cool then repeating this cycle. This has the effect of removing any volatile extraneous substances or extractives within wood, thereby improving the ability to predictably absorb and desorb moisture.

The size of the dowell sensors may vary depending on the location into which they will be installed.

Typically dowells may be 9mm in diameter and 50mm long. Tests have shown that reducing the diameter of the dowell sensor results in faster equilibration with the building fabric. Increasing the length of the dowell sensor may be useful in situations, for example, where there is a wall cavity, and the sensor is to be used to monitor the fabric from the other side of the wall cavity. A longer sensor dowell will be useful in such a situation.

The sensor is installed into a pre-drilled hole in the building fabric. The hole must be slightly larger than the sensor diameter ( usually 12 mm for 9 mm sensor diameter) It is essential that the sensor makes contact with the building fabric either at the side or the end of the sensor.

### Impregnation with reagent

The reagent is made up by dissolving 0.05 g bromophenol blue or (alternative indicator) in 100 ml of methanol: distilled water (1:1). Conveniently the reagent can be made up in whatever quantity is required. Ramin dowels cut to desired length and pre-conditioned, as described are placed in a container within a vacuum chamber. The reagent is then added to the contained such that all the ramin dowells are submerged within the reagent. The vacuum chamber is then sealed and a vacuum drawn. The vacuum is maintained for 30 minutes during which time all the air is drawn from the wood vessels and fibres, and is replaced by the reagent. The container is then removed from the vacuum chamber and the dowells left submerged in the reagent for a period of 24 hours or until complete penetration is achieved.

The dowells become completely impregnated with the reagent.

After impregnation the sensor dowells ate blotted with absorbent paper to remove excess reagent then allowed to fully dry out at normal air temperature. Complete drying is normally achieved after a few days at normal temperature. Drying may be speeded up by heating in an oven.

Bromophenol blue is an indicator that reacts to a change in acidity by turning from blue to yellow. The colour change takes place when the pH changes from 5 to 3.5. Bromocresol green in a similar way reacts to a change in pH in a range of between 3.5 and 5.5.

These reagents have proved to be the most reliable although any pH indicator that changes colour within the pH 3 to 5 range may be suitable.

Our own studies have shown that the practical application of the dual function sensor ie, the ease of visualization, is limited by the high variability of natural acidity of timbers in buildings. This limitation was overcome by using preconditioned impregnated Ramin detector sensors.

The sensors may be located in wood (beam ends) in vulnerable locations or in masonry brickwork or plasterwork that is considered to be close to timbers at risk from decay.

The advantage of locating sensors in masonry brickwork or plasterwork is that it is then possible to map the distribution of moisture throughout a wall affected by the ingress of moisture and therefore having at-risk timbers located either within the wall or in close proximity to the wall identified and treated.

Such an action will enable the moisture distribution to be mapped out throughout the whole length breadth and thickness of the wall. The moisture recorded is the free moisture and is not affected either by the natural hygroscopicity of the wall or by the distribution of electrolytes both of which produce false readings on electronic meters, and complicate the measurement of moisture in building components.

The dry perimeter beyond which no decay is possible can be confirmed and monitored. The extent of fungal growth within the building fabric can therefore be ascertained.

Where there is no colonization of timber decay fungi the sensor will not change colour and will dry out along with the wall. This ensures there is no latent decay after, for example, a flooding incident. The drying process can be monitored in this way.

Where there is fungal decay the extent of decay and the extent to which it continues to spread can be monitored by the colour changes in the sensors at the locations where the sensors are installed.

This has several advantages.

The extent of existing spread of decay can be established without the need for disruption to walls and floors

The extent and spread of decay can be monitored as it happens.

The dry perimeter beyond which no decay is possible can be confirmed and monitored.

The success of remedial intervention can be monitored until the decay is confirmed as dead. (Dry (Moisture content less than 18% by weight ) for a specified period and no colour reaction.)

All of the above are of great importance especially in historic buildings where inspections and surveys of timber rot often results in damage to important and valuable building features.

### Holder or Applicator

The aesthetics of the sensor dowell have been improved by designing an adaptor or holder or recepticle that incorporates electrical contacts to form an interface with a proprietory electrical moisture meter. The electrical contacts may be copper or any electrical conducting material connected to a female jack contact. The electrical contacts are located within an injection moulded plastic material that has good durability and is dimensionally stable at normal temperatures.
The adaptor device is designed to be disposable although it is possible to re-use by fitting a new sensor dowell carefully such the electrical contacts are undamaged.

A range of colour options is available so that the installation of sensors within a building can be unobtrusive.

Using the adaptor device the sensors may remain in position serving a permanent or long-term detecting function. This has particular advantages in the long-term monitoring of decay in buildings of high value or historic interest where there is a conservation imperative.

Using the adaptor device the sensor dowell could form part of an automated system that could provide early warning of the threat of decay at all the at-risk locations within a building.

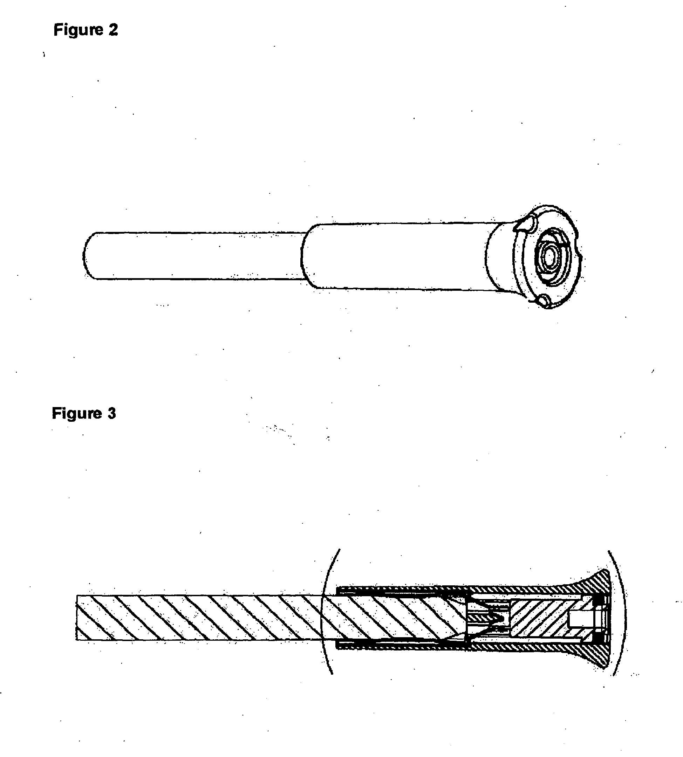

**In** **Figure 2** the sensor dowell 1 is shown inserted into the holder or adaptor 2. A standard 3.5 mm jackplug is inserted 3 and connected to a proprietory electronic moisture meter.

**In** **Figure 3** the sensor dowell 1 is shown inserted into the holder or adaptor 2. The electrical contacts 4 are shown in contact with the sensor dowel. A standard 3.5 mm jackplug is inserted 3 and connected to a proprietory electronic moisture meter.

## Claims

1. A sensor for the detection of wood destroying fungi, especially dry rot *Serpula lacrimans,* in wood masonry and plaster, said sensor consisting of a dowel or peg manufactured from Ramin, *(Gonostylus macrophyllum)* or other light coloured wood, pretreated with a pH sensitive reagent that responds to the presence of substances secreted by the fungus.

2. A sensor according to claim 1 where the reagent is formulated from bromophenol blue.

3. A sensor according to claim 1 where the reagent is formulated from bromocresol green.

4. A sensor according to claim 1 where the reagent is formulated by dilution in a water-miscible solvent.

5. A sensor according to claim 1 where the reagent is incorporated into the wood by vacuum or pressure impregnation.

6. Use of a sensor according to claims 1-5 for detecting moisture and the presence of wood destroying fungi at the same time.

7. Use according to claim 6, wherein the sensor is inserted into a receptacle adaptor or holder that forms an interface with an electrical moisture meter.

8. Use according to claim 7 wherein the electrical moisture meter is linked remotely to a monitoring station.

9. Use according to claim 7 wherein the receptacle may be reused by inserting a fresh treated dowel.

## Patentansprüche

1. Ein Sensor zum Aufspüren von Holz zerstörenden Schwämmen, insbesondere des Echten Hausschwammes, *Serpula lacrimans*, in Holz, Mauerwerk und Putz. Besagter Sensor besteht aus einem Dübel oder Stift, hergestellt aus Ramin (*Gonostylus macrophyllum*) oder einem anderen hell gefärbten Holz, welches mit einem PH sensitivem Reagens vorbehandelt worden ist und auf die Präsenz von Substanzen, die der Schwamm absondert, reagiert.

2. Ein Sensor gemäß den Aussagen unter Punkt 1, wobei das Reagens aus einer Verbindung mit Bromophenol blau entstanden ist.

3. Ein Sensor gemäß den Anforderungen unter Punkt 1, wobei das Reagens aus einer Verbindung mit Bromocresol grün entstanden ist.

4. Ein Sensor gemäß den Aussagen unter Punkt 1, wobei das Reagens durch Verdünnung in einem wassergemischtem Lösungsmittel entstanden ist.

5. Ein Sensor gemäß den Aussagen unter Punkt 1, wobei das Reagens mittels Vakuum- oder Druckimprägnierung in das Holz eingebracht wird.

6. Die Anwendung von Sensoren gemäß den Aussagen 1 - 5, um den Nachweis von Feuchtigkeit und gleichzeitig die Präsenz von Holz zerstörenden Schwämmen zu erbringen.

7. Die Anwendung gemäß Aussage 6, wobei der Sensor in einen entsprechend geformten Behälter oder ein Gerät eingesetzt wird, welches eine Verbindung mit einem elektrischen Feuchtigkeitsmessgerät bildet.

8. Die Anwendung gemäß Aussage 7, wobei das elektrische Feuchtigkeitsmessgerät mit einer entfernt gelegenen Überwachungsanlage verbunden ist.

9. Die Anwendung gemäß Aussage 7, wobei durch Einsetzen eines neu behandelten Dübels der Behälter wieder benutzt werden kann.

## Revendications

1. Un capteur pour la détection des moisissures qui détruisent le bois, surtout la pourriture sèche, *Serpula lacrimans*, dans la maçonnerie de bois et le plâtre. Ce capteur se compose d'une cheville fabriquée de Ramin (*Gonostylus macrophyllum*) ou d'autre bois de couleur claire prétraité d'un réactif sensible au pH et qui réagit à la présence des substances sécrétées par les moisissures.

2. Un capteur d'après l'affirmation 1 où le réactif est formulé de *bromophenol blue.*

3. Un capteur d'après l'affirmation 1 où le réactif est formulé de *bromocresol green.*

4. Un capteur d'après l'affirmation 1 où le réactif est formulé par la déconcentration dans un solvent eau-miscible.

5. Un capteur d'après l'affirmation 1 où le réactif est incorporé sous-vide dans le bois ou par l'imprégnation sous pression.

6. Emploi d'un capteur d'après les affirmations 1-5 pour la détection sumultanée de l'humidité et la présence des moisissures qui détruisent le bois.

7. Emploi d'aprés l'affirmation 6 où le capteur est inseré dans un adapteur ou récipient qui forme une interface avec un humidimètre électrique.

8. Emploi d'après l'affirmation 7 où l'humidimètre électrique est connecté a une station de surveillance sur internet.

9. Emploi d'après l'affirmation 7 où le récipient peut être réutilisé par l'insertion d'une nouvelle cheville traitée.
